# EUROPÄISCHE PATENTSCHRIFT

(11) **EP 0 489 346 B1**
(45) Veröffentlichungstag und Bekanntmachung des Hinweises auf die Patenterteilung: **25.09.1996**
(21) Anmeldenummer: 91120252.1
(22) Anmeldetag: 27.11.1991
(51) Int. Cl.: G08B 26/00

(54) **Verfahren zur automatischen Zuordnung von Meldeadressen bei einer Gefahrenmeldeanlage**
Method for the automatic ranging of detector addresses by an alarm system
Procédé pour le rangement automatique des adresses des détecteurs dans un système d'alarme

(30) Priorität: 06.12.1990 DE 4038992
(43) Veröffentlichungstag der Anmeldung: 10.06.1992
(73) Patentinhaber: SIEMENS AKTIENGESELLSCHAFT, 80333 München (DE)
(72) Erfinder: Kaiser, Klaus, W-8081 Mittelstetten (DE); Moser, Otto Walter, Dipl.-Ing., W-8000 München 70 (DE); Thilo, Peer, Dr.-Ing., W-8000 München 71 (DE)

(56) Entgegenhaltungen:
- EP-A- 0 161 344
- EP-A- 0 348 810
- GB-A- 2 168 517

## Beschreibung

In Gefahrenmeldeanlagen sind in der Regel eine größere Anzahl Gefahrenmelder auf einer Meldeprimärleitung angeordnet, über die sie mit der Zentrale kommunizieren. Dazu ist es zunehmend notwendig, einen gezielten Datenverkehr durchzuführen und dafür jedem Gefahrenmelder eine eigene Adresse zuzuordnen. Da eine Gefahrenmeldeanlage häufig sehr viele Melder und auch Steuerorgane enthält, ist es wichtig, die Zuordnung der Adressen einfach, preiswert und irrtumssicher durchführen zu können. Darüber hinaus ist wegen des Sicherheitscharakters der Anlage eine große Betriebssicherheit nötig.

Es wurden eine Reihe von aus anderen Aufgabengebieten bekannten Übertragungs-Adressierverfahren vorgeschlagen und zum Teil auch realisiert. So werden z.B. der freie Zugriff auf beliebige Melder, die zyklische Abfrage oder auch Kollisionsverfahren verwendet. Alle benötigen die Vergabe individueller Melderadressen und unterscheiden sich zusätzlich dadurch, wie diese Adressen eingestellt werden. Dafür sind Schalter, meist im Binärcode, Lötbrücken oder Stecker bzw. von vornherein mit nicht änderbaren, unterschiedlichen Adressen versehene Melder gebräuchlich, wobei letztere entweder für jede Adresse vorgefertigt werden, wodurch eine große Zahl unterschiedlicher Stecker bzw. Melder nötig ist, oder vor Ort aus gleichartigen Rohlingen hergestellt werden, was aber sehr aufwendig ist und die Gefahr der Verwechslung beinhaltet. Die Adressiereinrichtung wird entweder im (steckbaren) Melder untergebracht, dann ist der Meldertausch problematisch, oder sie wird in der Melderfassung untergebracht, dann sind Einstellung und Wartung schwierig.

Ohne einstellbare Adressen arbeitet die Kettensynchronisation im Pulsmeldesystem, bei der über einen Schalter, der in jedem Melder angebracht ist und dort die Meldeprimärleitung unterbrechen kann, die Kommunikationsberechtigung von Melder zu Melder weitergereicht wird. Ähnlich funktioniert auch das in der DE 28 36 760 C2 beschriebene elektronische Fernüberwachungssystem. Bei diesem System geht von einer auswertenden Zentrale mindestens eine mit mehreren Gebern besetzte Zweidraht-Geberlinie aus, wobei die Geber in einer Folgeschaltung derart miteinander verbunden sind, daß jeweils ein Geber nach Abgabe seines Signals über ein Zeitglied und ein Schaltglied den nächstfolgenden Geber an die Zweidraht-Geberlinie anschaltet. Das Schaltglied befindet sich dabei in einer der beiden Leitungen der Zweidraht-Geberlinie. Bei diesem System ist ebenfalls keine individuelle Adressierung der einzelnen Geber möglich. Außerdem erhöht der sowohl beim Pulsmeldesystem als auch bei diesem Fernüberwachungssystem in der Leitung angeordnete Schalter den Leitungswiderstand und die Kosten und beeinträchtigt die für die Störsicherheit wichtige Leitungssymmetrie.

Aus der EP 0 348 810 A2 ist ein Verfahren zur Adressierung von Prozessoreinheiten und eine Schaltungsanordnung zur Durchführung dieses Verfahrens bekannt. Bei dieser Schaltungsanordnung sind die Prozessoreinheiten in Kettenschaltung in einem Nachrichtenübertragungsnetz, das Stern- oder Baumstruktur haben kann, angeordnet und mit einer Zentrale verbunden. Bei der Initialisierung des Netzes wird eine von der Zentrale ausgesendete Adresse von der der Zentrale am nächsten gelegenen Prozessoreinheit empfangen. Diese Prozessoreinheit prüft sodann, ob sie schon mit einer Adresse versorgt ist. Wenn nicht, nimmt sie die eben empfangene Adresse als eigene Adresse an, wenn sie schon eine Adresse hatte, gibt sie die soeben empfangene Adresse an die nächste Prozessoreinheit weiter, bei der dann derselbe Vorgang abläuft. Dieses Verfahren wird so lange durchgeführt, bis alle Prozessoreinheiten mit Adressen versorgt sind. Die Durchführung dieses komplizierten Verfahrens erfordert einen hohen schaltungstechnischen Aufwand, der nur bei komplexen Netzstrukturen mit beispielsweise Mehrfachverzweigung, gerechtfertigt ist.

Aus GB-A-2 168 517 ist ein Verfahren zur automatischen Zuordnung von Melderadressen bei einer Gefahrenmeldeanlage bekannt.

Die Aufgabe der Erfindung ist es somit, ein Verfahren zur automatischen Zuordnung von Melderadressen anzugeben, das sowohl die Einstellung von individuellen Adressen und alle damit zusammenhängende Probleme, als auch die im Leitungszug angeordneten Schalter vermeidet, dabei aber trotzdem eine individuelle Adreßzuordnung, die der physikalischen Anordnung der Melder auf der Meldeprimärleitung folgt, und die Verwendung völlig gleichartiger Melder ermöglicht.

Die Aufgabe wird gelöst durch ein Verfahren zur automatischen Zuordnung von Melderadressen bei einer Gefahrenmeldeanlage mit einer Zentrale und zumindest einer damit verbundenen Meldeprimärleitung, auf der mehrere mit zumindest einer Übertragungseinrichtung, einem Meßwertspeicher, einem Adreßspeicher, einer Spannungsmeßeinrichtung und einem Schalter gebildete Gefahrenmelder angeordnet sind, wobei in jedem der Melder in jeder der beiden Adern der Meldeprimärleitung ein Widerstand angeordnet ist, und wobei von der Zentrale in einer ersten Phase eine Ruhespannung an die Leitung gelegt wird, wodurch die Melder mit Energie versorgt werden, in einer zweiten Phase eine Kurzschließspannung an die Leitung gelegt wird, wodurch alle Melder, deren Adreßspeicher leer ist, die Leitung mittels des Schalters kurzschließen, in einer dritten Phase der Leitung ein Meßstrom eingeprägt wird, und die dadurch an den Widerständen des ersten Melders mit geschlossenem Schalter abfallende Spannung von der Spannungsmeßeinrichtung ermittelt und ihr Wert in dem Meßwertspeicher gespeichert wird, und in einer vierten Phase eine Abfragespannung an die Leitung gelegt wird, wodurch der Melder, dessen Meßwertspeicher belegt, dessen Adreßspeicher aber leer ist, kommunikationsfähig wird und von der Zentrale eine Adresse zugeteilt bekommt, die er im Adreßspeicher ablegt.

Dieser Vorgang wird von der Zentrale so oft wiederholt, bis alle Melder mit Adressen versehen sind, was die Zentrale daran erkennt, daß in der darauffolgenden dritten Phase kein Kurzschlußstrom mehr fließt.

Nachdem alle Melder mit Adressen versorgt sind, wird die weitere, betriebsmäßige Kommunikation, in an sich bekannter Weise, z.B. mit freiem Zugriff, mit zyklischer Synchronisation oder im Kollisionsverfahren, durchgeführt.

Die Übertragungseinrichtung ist in zweckmäßiger Ausführung der Erfindung mit einem Mikrocontroller gebildet, wobei sowohl der Meßwertspeicher als auch der Adreßspeicher in dessen Arbeitsspeicher enthalten sein können. Die Spannungsmeßeinrichtung kann mit einem einfachen Komparator gebildet sein.

Ein Vorteil dieses Verfahrens zur Adreßversorgung ist, daß mit der dazu nötigen Vorrichtung auch andere Verfahren möglich sind. So können z.B. alle Melder bei der Fertigung ihre Fabrikationsnummer im Adreßspeicher eingespeichert erhalten. Sie können dann mit der Zentrale derart kommunizieren, daß die Zentrale alle möglichen Fabrikationsnummern aufruft und der Melder, der die gerade aufgerufene Nummer abgespeichert hat, in der dritten Phase die Meldeprimärleitung kurzschließt. In der vierten Phase werden dann dieser Melder und die vor ihm angeordneten gefüllte Meßwertspeicher besitzen und dies der Zentrale melden, während die Meßwertspeicher der auf ihn folgenden Melder leer sind. Die Zentrale speichert diesen Zustand intern und errechnet, nachdem alle Melder erkannt wurden, mit an sich bekannten Rechenverfahren die Zuordnung der physikalischen Adresse zur jeweiligen Fabrikationsnummer. Betriebsmäßig kann der Melder anschließend weiterhin über die Fabrikationsnummer adressiert werden oder es kann ihm, wie oben beschrieben, eine organisatorische Adresse zugeteilt, übertragen und im Adreßspeicher abgelegt werden.

Zur Lösung der Aufgabe ist es auch möglich, nur im letzten Melder einen Schalter vorzusehen, wodurch in der zweiten Phase des Verfahrens nur dieser Melder die Leitung kurzschließt und dann in einer dritten Phase der Leitung ein Meßstrom eingeprägt wird und die dadurch an den einzelnen Meldern abfallenden Spannungen von deren Spannungsmeßeinrichtungen ermittelt und in den jeweiligen Meßwertspeichern als temporäre Adressen gespeichert werden, und in einer vierten Phase eine Abfragespannung an die Leitung gelegt wird, wodurch alle Melder kommunikationsfähig werden und von der Zentrale über ihre temporären Adressen adressiert und jeweils mit einer festen Adresse, die in dem jeweiligen Adreßspeicher gespeichert wird, versehen werden.

Um die Melder über deren temporäre Adressen zu adressieren, kann die Zentrale entweder vom Wert Null ausgehend in aufsteigender Reihenfolge oder aber vom größtmöglichen Spannungswert ausgehend in absteigender Reihenfolge alle möglichen Spannungswerte als temporäre Adressen aufrufen. In weiterer Ausgestaltung der Erfindung enthält auch die Zentrale eine Spannungsmeßeinrichtung, mittels der in der dritten Phase die Leitungsspannung als aktuelle größtmögliche Spannung gemessen wird. Dadurch kann die Dauer der Abfrage verkürzt werden, da dieser Wert in der Regel deutlich kleiner als der absolut größtmögliche ist und somit eine deutlich kleinere Zahl von Abfragevorgängen erfolgt. In einer zweckmäßigen Ausführung der Erfindung sind auch bei diesem Verfahren in jedem der Melder in jeder der beiden Adern der Meldeprimärleitung ein Widerstand angeordnet, so daß die Spannungsmeßeinrichtung die durch den eingeprägten Strom an den Widerständen abfallende Spannung mißt. Die Spannungsmeßeinrichtung kann mit einem Analog/Digital-Wandler gebildet sein. Statt des letzten Melders kann auch ein Linienabschluß montiert werden, der zwar wie der oben beschriebene Melder funktioniert aber keine Einrichtung zur Gefahrendetektion besitzt. Weiterhin ist es möglich die Meldeprimärleitung als Schleife auszubilden, wobei der Leitungskurzschlußschalter in der Zentrale angeordnet ist. Bei dieser Anordnung ist es möglich, die Meldeprimärleitung von beiden Enden her zu initiieren.

Die Erfindung soll nun anhand eines Ausführungsbeispiels mit Hilfe von Figuren näher erläutert werden. Es zeigen dabei
- Fig. 1: eine typische Anordnung einer Gefahrenmeldeanlage,
- Fig. 2: eine Gefahrenmeldeanlage für das erfindungsgemäße Verfahren,
- Fig. 3: eine weitere mögliche Gestaltung einer erfindungsgemäßen Gefahrenmeldeanlage und
- Fig. 4: einen Gefahrenmelder für das erfindungsgemäße Verfahren.

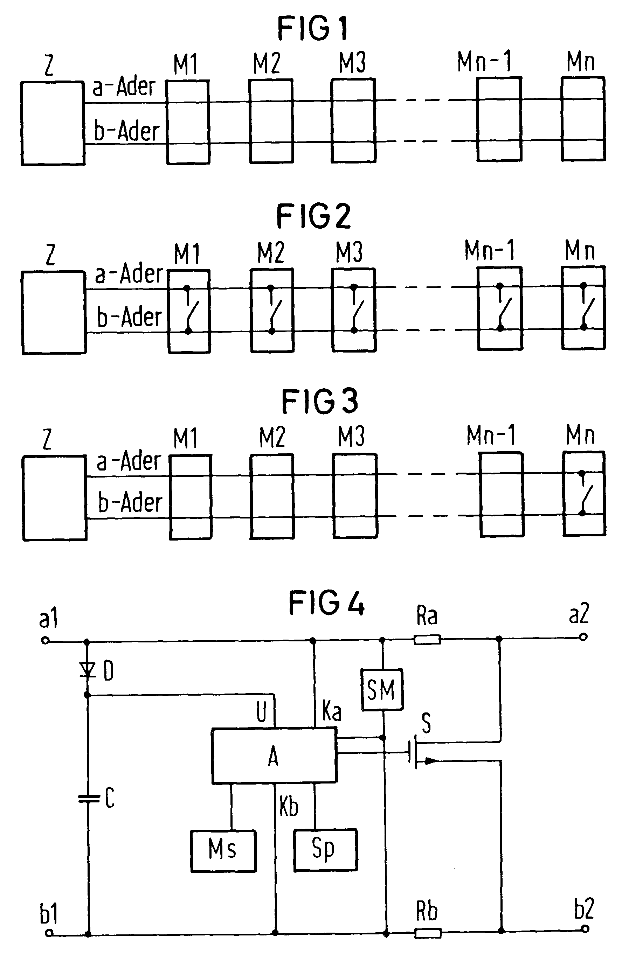

Fig. 1 zeigt eine typische Gefahrenmeldeanlage mit einer Zentrale Z, an die beispielhaft eine aus zwei Adern a,b bestehende Meldeprimärleitung angeschlossen ist. Auf der Meldeprimärleitung sind mehrere Gefahrenmelder M1 bis Mn angeordnet.

Eine mögliche Ausführungsform einer Gefahrenmeldeanlage für das erfindungsgemäße Verfahren zur Adressenvergabe zeigt Fig. 2. Als wesentlicher Unterschied zur in Fig. 1 dargestellten Gefahrenmeldeanlage ist der in den Meldern nötige Kurzschließschalter angedeutet.

Fig. 3 zeigt eine Gefahrenmeldeanlage, bei der nur der letzte Melder Mn einen Schalter enthält, so daß in der zweiten Phase nur dieser Melder die Leitung kurzschließen kann. In der dritten Phase messen dann alle Spannungsmeßeinrichtungen SM die an den jeweiligen Melder M1 bis Mn-l abfallenden Spannungen und legen die gemessenen Werte als temporäre Adressen in den jeweiligen Meßwertespeichern Ms ab. Das weitere Verfahren erfolgt dann wie oben beschrieben.

Eine detailliertere Darstellung eines solchen Gefahrenmelders Ml bis Mn zeigt Fig. 4. Ein Kondensator C ist über eine Diode D an das eingangsseitige Klemmenpaar a1,b1 angeschlossen. Er versorgt, nachdem er während der ersten Phase des Verfahrens aufgeladen wurde, die Übertragungseinrichtung A über die Leitungen U und Kb während der zweiten bis vierten Phase mit Energie. Nachdem in der zweiten Phase des Verfahrens der Schalter S die ausgangsseitigen Klemmen a2,b2 kurzgeschlossen hat, mißt die Spannungsmeßeinrichtung SM die in der dritten Phase durch den von der Zentrale Z in die Meldeprimärleitung eingeprägten Meßstrom an den in den Adern a,b angeordneten Widerständen Ra und Rb abfallenden Spannungen. Die gemessene Spannung wird in den Meßwertspeicher Ms eingetragen. Bei gefülltem Meßwertspeicher Ms kommuniziert in der vierten Phase die Übertragungseinrichtung A über die Klemmen Ka und Kb mit der Zentrale Z. Der Melder bekommt dann von der Zentrale Z eine Adresse zugeteilt, die er im Adreßspeicher Sp ablegt.

## Patentansprüche

1. Verfahren zur automatischen Zuordnung von Melderadressen bei einer Gefahrenmeldeanlage mit einer Zentrale (Z) und zumindest einer damit verbundenen zweiadrigen Meldeprimärleitung, auf der mehrere mit zumindest einer Übertragungseinrichtung (A), einem Meßwertspeicher (Ms), einem Adreßspeicher (Sp), einer Spannungsmeßeinrichtung (SM) und einem Schalter (S) gebildete Gefahrenmelder (M1 bis Mn) angeordnet sind, wobei in jedem der Melder (M1 bis Mn) in jeder der beiden Adern der Meldeprimärleitung ein Widerstand (Ra,Rb) angeordnet ist, und wobei von der Zentrale (Z)
- in einer ersten Phase eine Ruhespannung an die Leitung (L) gelegt wird, wodurch die Melder (M1 bis Mn) mit Energie versorgt werden,
- in einer zweiten Phase eine Kurzschließspannung an die Leitung gelegt wird, wodurch alle Melder (M1 bis Mn), deren jeweiliger Adreßspeicher (Sp) leer ist, die Leitung mittels des Schalters (S) kurzschließen,
- in einer dritten Phase der Leitung ein Meßstrom eingeprägt wird, und die dadurch an den Widerständen (Ra,Rb) des ersten Melders mit geschlossenem Schalter (S) abfallende Spannung von der Spannungsmeßeinrichtung (SM) ermittelt und ihr Wert in dem Meßwertspeicher (Ms) gespeichert wird,
- und in einer vierten Phase eine Abfragespannung an die Leitung gelegt wird, wodurch der Melder, dessen Meßwertspeicher (Ms) belegt, dessen Adreßspeicher (Sp) aber leer ist, kommunikationsfähig wird und von der Zentrale (Z) eine Adresse zugeteilt bekommt, die er im Adreßspeicher (Sp) ablegt.

2. Verfahren nach Anspruch 1,
**dadurch gekennzeichnet,**
daß die Spannungsmeßeinrichtung (SM) mit einem Komparator gebildet ist.

3. Verfahren nach einem der Ansprüche 1 bis 2,
**dadurch gekennzeichnet**,
daß die Übertragungseinrichtung (A) mit einem Mikrocontroller gebildet ist.

4. Verfahren zur automatischen Zuordnung von Melderadressen bei einer Gefahrenmeldeanlage mit einer Zentrale (Z) und zumindest einer damit verbundenen zweiadrigen Meldeprimärleitung, auf der einer oder mehrere Gefahrenmelder (M1 bis Mn) angeordnet sind, die zumindest eine Übertragungseinrichtung (A), eine Spannungsmeßeinrichtung, einen Meßwertspeicher (Ms) und einen Adreßspeicher (Sp) enthalten und nur der letzte Gefahrenmelder (Mn) zusätzlich einen Schalter (S) enthält, wobei von der Zentrale (Z)
- in einer ersten Phase eine Ruhespannung an die Leitung gelegt wird, wodurch die Melder (M1 bis Mn) mit Energie versorgt werden,
- in einer zweiten Phase eine Kurzschließspannung an die Leitung gelegt wird, wodurch der letzte Melder (Mn) die Leitung mittels des Schalters (S) kurzschließt,
- in einer dritten Phase der Leitung ein Meßstrom eingeprägt wird und die dadurch an den einzelnen Meldern anstehenden Spannungen von deren Spannungsmeßeinrichtungen ermittelt und in den jeweiligen Meßwertspeichern (Ms) als temporäre Adressen gespeichert werden,
- und in einer vierten Phase eine Abfragespannung an die Leitung gelegt wird, wodurch alle Melder kommunikationsfähig werden und von der Zentrale (Z) über ihre temporären Adressen adressiert und jeweils mit einer festen Adresse, die in dem jeweiligen Adreßspeicher (Sp) gespeichert wird, versehen werden.

5. Verfahren nach Anspruch 4,
dadurch **gekennzeichnet**,
daß die Zentrale (Z) vom Wert Null ausgehend in aufsteigender Reihenfolge, alle möglichen Spannungswerte als temporäre Adressen aufruft.

6. Verfahren nach Anspruch 4,
**dadurch gekennzeichnet,**
daß die Zentrale (Z) vom größtmöglichen Spannungswert ausgehend, in absteigender Reihenfolge, alle möglichen Spannungswerte als temporäre Adressen aufruft.

7. Verfahren nach Anspruch 6,
**dadurch gekennzeichnet,**
daß auch die Zentrale (Z) eine Spannungsmeßeinrichtung enthält, mittels der in der dritten Phase die Leitungsspannung als aktuelle größtmögliche Spannung gemessen wird.

8. Verfahren nach einem der Ansprüche 4 bis 7,
**dadurch gekennzeichnet,**
daß in jedem der Melder (M1 bis Mn) in jeder der beiden Adern der Meldeprimärleitung ein Widerstand (Ra,Rb) angeordnet ist, und daß die Spannungsmeßeinrichtung die durch den eingeprägten Strom an den Widerständen abfallende Spannung mißt.

9. Verfahren nach einem der Ansprüche 4 bis 8,
**dadurch gekennzeichnet,**
daß die Spannungsmeßeinrichtung mit einem Analog-/Digital-wandler gebildet ist.

10. Verfahren nach einem der Ansprüche 4 bis 9,
**dadurch gekennzeichnet,**
daß die Meldeprimärleitung als Schleife ausgebildet ist, und daß der Leitungskurzschlußschalter (S) in der Zentrale (Z) angeordnet ist.

## Claims

1. Method for the automatic assignment of detector addresses in a hazard detection system having a central control means (Z) and at least one two-wire primary alarm line connected thereto, on which line there are arranged a plurality of hazard detectors (M1 to Mn) which are formed with at least a transmission device (A), a measured value memory (Ms), an address memory (Sp), a voltage measuring device (SM) and a switch (S), a resistor (Ra,Rb) being arranged in each of the detectors (M1 to Mn) in each of the two wires of the primary alarm line, and the central control means (Z) performing the following tasks:
- in a first phase, applying a quiescent voltage to the line (L), by which means the detectors (M1 to Mn) are supplied with power,
- in a second phase, applying a short-circuit voltage to the line, by which means all the detectors (Ml to Mn), whose respective address memory (Sp) is empty, short-circuit the line by means of the switch (S),
- in a third phase, impressing a measurement current on the line and determining the voltage drop, which occurs as a result across the resistors (Ra,Rb) of the first detector with a closed switch (S), by means of the voltage measuring device (SM) and storing its value in the measured value memory (Ms),
- and in a fourth phase, applying an interrogation voltage to the line, by which means the detector whose measured value memory (Ms) is occupied but whose address memory (Sp) is empty becomes capable of communication and receives an address, allocated by the central control means (Z), which it stores in the address memory (Sp).

2. Method according to Claim 1, characterized in that the voltage measuring device (SM) is formed using a comparator.

3. Method according to one of Claims 1 to 2, characterized in that the transmission device (A) is formed using a microcontroller.

4. Method for the automatic assignment of detector addresses in a hazard detection system having a central control means (Z) and at least one two-wire primary alarm line connected thereto, on which line there are arranged one or more hazard detectors (M1 to Mn) which contain at least a transmission device (A), a voltage measuring device, a measured value memory (Ms) and an address memory (Sp), and only the last hazard detector (Mn) additionally contains a switch (S), the central control means (Z) performing the following tasks:
- in a first phase, applying a quiescent voltage to the line, by which means the detectors (M1 to Mn) are supplied with power,
- in a second phase, applying a short-circuit voltage to the line, by which means the last detector (Mn) short-circuits the line by means of the switch (S),
- in a third phase, impressing a measurement current on the line and determining the voltages, which are produced as a result on the individual detectors, by means of their voltage measuring devices and storing the said voltages in the respective measured value memories (MS) as temporary addresses,
- and in a fourth phase, applying an interrogation voltage to the line, by which means all the detectors become capable of communication and are addressed by the central control means (Z) via their temporary addresses and are in each case provided with a fixed address which is stored in the respective address memory (Sp).

5. Method according to Claim 4, characterized in that the central control means (Z) calls up all the possible voltage values as temporary addresses in an increasing sequence starting from the value zero.

6. Method according to Claim 4, characterized in that the central control means (Z) calls up all the possible voltage values as temporary addresses in a decreasing sequence starting from the greatest possible voltage value.

7. Method according to Claim 6, characterized in that the central control means (Z) also contains a voltage measuring device by means of which, in the third phase, the line voltage is measured as the current greatest possible voltage.

8. Method according to one of Claims 4 to 7, characterized in that a resistor (Ra,Rb) is arranged in each of the detectors (M1 to Mn) in each of the two wires of the primary alarm line, and in that the voltage measuring device measures the voltage drop across the resistors which results from the impressed current.

9. Method according to one of Claims 4 to 8, characterized in that the voltage measuring device is formed using an analog/digital converter.

10. Method according to one of Claims 4 to 9, characterized in that the primary alarm line is designed as a loop and in that the line short-circuit switch (S) is arranged in the central control means (Z).

## Revendications

1. Procédé d'attribution automatique d'adresses de signalisation dans une installation de signalisation de danger comportant un central (Z) et au moins une ligne principale de signalisation à deux conducteurs, qui est reliée au central et sur laquelle sont disposés plusieurs avertisseurs (M1 à Mn) de danger formés d'au moins un dispositif (A) de transmission, d'une mémoire (Ms) de valeurs de mesure, d'une mémoire (Sp) d'adresses, d'un dispositif (SM) de mesure de tension et d'un interrupteur (S), une résistance (Ra, Rb) étant disposée dans chacun des avertisseurs (M1 à Mn) dans chacun des deux conducteurs de la ligne principale de signalisation, et dans lequel par le central (Z)
- on applique dans une première phase une tension de repos à la ligne (L), ce qui alimente en énergie les avertisseurs (M1 à Mn),
- on applique dans une seconde phase une tension de court-circuit à la ligne, ce qui fait que tous les avertisseurs (M1 à Mn), dont la mémoire (Sp) d'adresses est vide, court-circuitent la ligne au moyen de l'interrupteur (S),
- on impose, dans une troisième phase, à la ligne un courant de mesure, on détermine, par le dispositif (SM) de mesure de tension, la chute de tension apparaissant ainsi aux bornes des résistances (Ra, Rb) du premier avertisseur à interrupteur (S) fermé et on mémorise sa valeur dans la mémoire (Ms) de valeurs de mesure,
- on applique, dans une quatrième phase, une tension d'interrogation à la ligne, ce qui fait que l'avertisseur, dont la mémoire (Ms) de valeurs de mesure est occupée, mais dont la mémoire (Sp) d'adresses est vide, devient apte à communiquer et ce qui fait que cet avertisseur reçoit du central (Z) une adresse attribuée, qu'il conserve dans la mémoire (Sp) d'adresses.

2. Procédé suivant la revendication 1,
caractérisé en ce que
le dispositif (SM) de mesure de tension est formé d'un comparateur.

3. Procédé suivant l'une des revendications 1 et 2,
caractérisé en ce que
le dispositif (A) de transmission est formé d'un microcontrôleur.

4. Procédé d'attribution automatique d'adresses de signalisation dans une installation de signalisation de danger comportant un central (Z) et au moins une ligne principale de signalisation à deux conducteurs, qui est reliée à ce central et sur laquelle sont disposés un ou plusieurs avertisseurs (M1 à Mn) de danger, qui comprennent au moins un dispositif (A) de transmission, un dispositif de mesure de tension, une mémoire (Ms) de valeurs de mesure et une mémoire (Sp) d'adresses et parmi lesquels seul le dernier avertisseur (Mn) de danger comprend en supplément un interrupteur (S), dans lequel par le central (Z)
- on applique, dans une première phase, une tension de repos à la ligne, ce qui alimente en énergie les avertisseurs (M1 à Mn),
- on applique dans une seconde phase une tension de court-circuit à la ligne, ce qui fait que le dernier avertisseur (Mn) court-circuite la ligne au moyen de l'interrupteur (S),
- on impose, dans une troisième phase, à la ligne un courant de mesure, on détermine les chutes de tension apparaissant ainsi aux bornes des divers avertisseurs par leurs dispositifs de mesure de tension et on les mémorise dans les mémoires (Ms) valeurs de mesure en tant qu'adresses temporaires,
- on applique, dans une quatrième phase, une tension d'interrogation à la ligne, ce qui rend tous les avertisseurs aptes à communiquer, on les adresse par le central (Z) par l'intermédiaire de leurs adresses temporaires et on les munit chacun d'une adresse fixe, que l'on mémorise dans la mémoire respective (Sp) d'adresses.

5. Procédé suivant la revendication 4,
caractérisé en ce que
le central (Z) appelle dans l'ordre croissant à partir de zéro toutes les valeurs possibles de tension comme adresses temporaires.

6. Procédé suivant la revendication 4,
caractérisé en ce que
le central (Z) appelle, en partant de la valeur de tension la plus grande possible, dans l'ordre décroissant, toutes les valeurs possibles de tension comme adresses temporaires.

7. Procédé suivant la revendication 6,
caractérisé en ce que
également le central (Z) comprend un dispositif de mesure de tension, au moyen duquel on mesure pendant la troisième phase la tension de ligne comme tension actuelle la plus grande possible.

8. Procédé suivant l'une des revendications 4 à 7,
caractérisé en ce que
il est disposé dans chacun des avertisseurs (M1 à Mn) dans chacun des deux conducteurs de la ligne principale de signalisation une résistance (Ra, Rb) et le dispositif de mesure de tension mesure la chute de tension aux bornes des résistances par le courant imposé.

9. Procédé suivant l'une des revendications 4 à 8,
caractérisé en ce que le dispositif de mesure de tension est formé d'un convertisseur analogique/numérique.

10. Procédé suivant l'une des revendications 4 à 9,
caractérisé en ce que
la ligne principale de signalisation est sous forme de boucle et l'interrupteur (S) de court-circuit de ligne est disposé dans le central (Z).
